(19) Europäisches Patentamt / European Patent Office / Office européen des brevets

(11) **EP 3 428 226 A1**

(12) **EUROPEAN PATENT APPLICATION**


(43) Date of publication:
**16.01.2019 Bulletin 2019/03**

(51) Int Cl.:
***C08K 5/103*** *(2006.01)*

(21) Application number: **17181372.8**

(22) Date of filing: **14.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**



(72) Inventors:
- **SPIJKERMAN, Geesje Klasina**
  **NL-7421 AS Deventer (NL)**
- **VELDKAMP-GROOT KOERKAMP, Francisca Anna Maria**
  **NL-7425 PG Deventer (NL)**
- **ROOLVINK-VERHAAGEN, Maatje Gerharda**
  **NL-7425 HN Deventer (NL)**

(71) Applicant: **Akzo Nobel Chemicals International B.V.**
**6824 BM Arnhem (NL)**

(74) Representative: **Akzo Nobel Chemicals IP Group**
**Velperweg 76**
**6824 BM Arnhem (NL)**


# (54) POLYPROPYLENE-BASED FILM OR SHEET WITH ANTI-FOG PROPERTIES


(57) Polypropylene composition comprising 0.7-4.0 wt% of glycerides of formula (I):

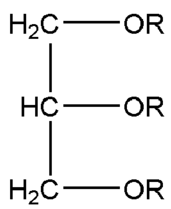

wherein the R-groups are selected from hydrogen, acetyl groups, palmityl groups, and stearyl groups,
wherein one R-group is selected from palmityl and stearyl groups and 30-50% of the total number of R-groups is an acetyl group,
and wherein the weight ratio glycerides of formula (I) containing palmityl groups to glycerides of formula (I) containing stearyl groups is in the range 0.25-4.0.


EP 3 428 226 A1

## Description

This invention relates to the prevention of fogging on the surface polypropylene films or sheets.

A major application of polypropylene is food packaging. Polypropylene has a high resistance to moisture vapour transmission and high transparency, which is evidently essential for this application.
However, due to temperature changes between their packaging and their storage and sales locations, any water that evaporates from the food (e.g. meat or vegetables) condenses on the inner surface of the film. The water droplets form a fogged surface, thereby reducing the visual transparency of the film. This effect is generally called "fogging" or "clouding". Fogging leads to reduced light transmission, which negatively affects the visual inspection of the package.

In order to reduce fogging of polypropylene films or sheets, so-called antifog agents can be added to the polymer. These antifog agents can be coated on the film or sheet, or they can be incorporated in the film or sheet. Incorporation in the film is generally preferred over coating on the film because of the lower processing costs, the lower environmental impact (i.e. no coating solvents required), and the absence of a separate layer that can be wiped or washed off the surface.

The antifog action of the incorporated antifog agents is most likely due to the migration of the antifog agent to the film's surface, thereby enhancing the hydrophilicity of the surface and decreasing the surface tension of the water, which causes the water to form a continuous, visually clear film instead of a fogged surface comprising individual droplets of water.

Fogging may occur under relatively cold conditions (below ambient temperature, e.g. cold outside or refrigerator conditions) and relatively warm conditions (above ambient temperature, e.g. in warm humid outside conditions). The first are called cold fog conditions; the second are called hot fog conditions.
In food packaging, cold fog is the major problem.

The antifog performance of different compounds differs largely per type of polymer. An antifog agent having good performance in polypropylene may have rather bad performance in polyethylene, and vice versa. Also the performance under cold and hot conditions may differ largely and appears rather unpredictable. An antifog agent having good cold fog performance in polypropylene does not automatically have good hot fog performance in the same polymer.

EP 0 578 192 discloses the use of a glycerol ester as antifog agent in a polypropylene copolymer-containing film. Examples of such glycerol esters are glycerol diacetate monooleate, glycerol diacetate monolaurate, glycerol diacetate monopalmitate, glycerol monoacetate dioleate, glycerol monoacetate dilaurate, glycerol monoacetate monopalmitate, glyceol monoacetate monooleate, glycerol monoacetate monolaurate, glycerol monoacetate monocaprylate, glycerol monoacetate brassidate, glycerol monopropriate monobrassidate, glycerol monoacetate monoerucate, and glyceol diproprionate monolaurate.

It has now been found that a very specific composition of acetylated glycerides provides a much better cold fog performance than the above individual glycerides. This composition contains glycerides of formula (I):

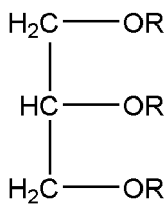

wherein the R-groups are selected from hydrogen, acetyl groups, palmityl groups, and stearyl groups,
wherein one R-group is selected from palmityl and stearyl groups and 30-50% of the total number of R-groups is an acetyl group,
and wherein the weight ratio glycerides of formula (I) containing palmityl groups to glycerides of formula (I) containing stearyl groups is in the range 0.25-4.0.

The present invention therefore relates to a polypropylene composition comprising 0.7-4.0 wt%, based on the total weight of the polypropylene composition, of the glycerides of formula (I).

It is noted that US 3,412,057 discloses the use of a mixture of monoacetoglyceryl monopalmitate and monoacetoglyceryl monostearate to reduce the gas permeability of polypropylene. The amounts used were such that appropriate antifogging action could not have been obtained.

In this specification, the term 'polypropylene' refers to polypropylene homopolymer, random- and block-copolymers of ethylene and propylene, and polymers obtained from propylene copolymerized with minimal amounts of other mono-olefinic monomers such as butene, isobutylene, acrylic acids, esters of acrylic acids, styrene, or combinations thereof.

The molar ratio of glycerides of formula (I) containing palmityl groups to glycerides of formula (I) containing

stearyl groups is in the range 0.25-4.0, preferably 0.5-3.0, and most preferably 1.0-2.0.

This ratio can be calculated from the peak areas in the gas chromatograms of glycerol monoacetate monopalmitate, glycerol diacetate monopalmitate, glycerol monoacetate monostearate, and glycerol diacetate monostearate.

The degree of acetylation, i.e. the number of acetyl groups relative to the total number of R-groups in the glyceride present in the polymer film or sheet, ranges from 30 to 50%. This degree of acetylation is defined as the number of acetate R-groups relative to the total number of R-groups. T can be calculated as follows, using the molar amounts of all glycerol components (A), monoacetate glycerol esters (B), and diacetate glycerol esters (C) as determined from the a gas chromatogram:

$$\text{degree of acetylation} = 100 \times (B + 2C)/3A$$

The glycerides of formula (I) can be prepared by the acid catalysed reaction of acetic anhydride with glycerol monostearate and glycerol monopalmitate. Alternatively, they can be prepared by reacting glycerol monostearate and glycerol monopalmitate with triacetin in the presence of a base. Any glyceryl di- and triacetates can be removed by vacuum distillation.

Instead of the glycerol monostearate and -palmitate, palmitate- and stearate-based vegetable or animal oils and fats can be used, such as palmoil, palmstearine, rapeseed oil, and soybeen oil. The glycerides of formula (I) can be separated from any acetylated di- and triglycerides by vacuum distillation. The resulting distilled, acetylated monoglyceride product usually is a mixture of acetylated monoglycerides of the various fatty acid moieties present in the fat from which the product is obtained. The concentration of the acetylated monoglycerides is at least 50 wt% and typically 80 wt% of the product.

The palmytyl/stearyl ratio that is required by formula (I) can be obtained directly from the above reaction, or can be arranged by blending starting compounds to this ratio, or blending the obtained acetylated monoglycerides to this ratio.

The glyceride of formula (I) can be incorporated in the polypropylene by mixing it into molten polypropylene using conventional techniques, such as extrusion, roll-milling, or mixing in a Banbury mixer. The glyceride may be added to the polyolefin before or after said polypropylene has been melted. The glyceride may be added as such, or in the form of a masterbatch in polypropylene.

The resulting mixture is then solidified by cooling and comminuted to a particle size satisfactory for further shaping processes like blown film extrusion, cast film extrusion, hot melt extrusion, or equivalent heat-shaping operations.

It is also possible to incorporate this composition into a multi-layer system. Such a multi-layer system will contain at least one layer, preferably an outer layer, made from this composition. Other layers of such a multi-layer system may be based on, for instance, polyamide (e.g. nylon) and/or polyester (e.g. polyethylene terephthalate) and/or EVA. Multi-layer systems can be prepared by co-extrusion or lamination.

The glyceride of formula (I) is incorporated in the polypropylene in an amount of at least 0.7 wt%, more preferably at least 1.0 wt%, based on total polypropylene film weight. Lower amounts do not provide sufficient antifog performance. The glycerol ester is incorporated in the polypropylene film in an amount of at most 4.0 wt%, more preferably at most 3.0 wt%, and most preferably at most 2.0 wt%, based on total polypropylene film weight. Higher amounts may lead to a tacky and greasy feel. The blocking and slip properties of the resulting film may also be adversely affected. Moreover, an excess of antifog agent in the film adversely affects the adhesion of inks thereto.

In addition to the glyceride, the polypropylene composition may contain various conventional additives, such as anti-static agents, anti-oxidants, anti-ozonants, slip agents, anti-block agents, light stabilizers (e.g. HALS), UV stabilizers, colorants, tackifiers, and the like, if so desired.

The present invention also relates to a masterbatch of comprising 10-80 wt% of the glyceride of formula (I) and 30-90 wt% of a polymeric matrix.

Such masterbatch preferably comprises the glyceride for formula (I) in a concentration of 10-60 wt%, most preferably 20-50 wt%.

Suitable polymers for such polymeric matrix are any polymers that are compatible with polypropylene and can be dispersed in polypropylene. Examples thereof are polypropylene (PP), random- and block-copolymers of ethylene and propylene, and polymers obtained from propylene copolymerized with minimal amounts of other mono-olefinic monomers such as butene, isobutylene, acrylic acids, esters of acrylic acids, styrene or combinations thereof.

The preferred polymer is polypropylene.

EXAMPLES

Example 1

To a propylene homopolymer (Tatren™ HF322, MFI= 3.2 g/10 min) was added - using a 16 mm twin screw extruder at 180-220°C (die) - 12 wt% of acetylated glycerides with different fatty acid chain lengths.
The so-formed masterbatches were dry blended with the same polypropylene polymer as mentioned above to form a composition comprising 4 wt% glyceride in polypropylene. This composition was shaped to form a film using film blowing equipment at 190-220 °C.

Antifog performance was tested as follows:

Beakers of 600 ml (high model, 150 mm, 80 mm ø, without spout) were filled with 350 ml of tap water. Films prepared according to the Examples below were cut and placed on the beaker and fixed with a rubber band. The beakers were placed in a refrigerator at 4°C and fog was determined visually after 2 and 5 hours on the first day; and once a day thereafter.

The Fog Score is the best result obtained over time. It was scored according to the following system:

1 - <3: Opaque layer of small fog droplets
3 - <5: Opaque layer of large droplets
5 - <7: Complete layer of large transparent drops
7 - <8: Randomly scattered or only large transparent droplet(s)/ discontinuous film of water
8: Transparent film having no visible water

Scores within each score range further refine the visibility: the higher the score, the better the visibility.
Table shows that the best results are obtained using a combination of acetylated palmitate and steatate glycerol esters.

Table 1

| Chain length | % acetylation | Fog score |
|---|---|---|
| 12 | 50 | 1.75 |
| 16 | 50 | 3.75 |
| 16/18 | 50 | 8.25 |
| 18 | 50 | 1.75 |
| 14 | 50 | 1.0 |

## Claims

1. Polypropylene composition comprising 0.7-4.0 wt% of glycerides of formula (I):

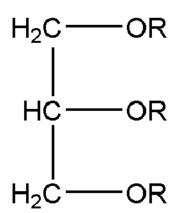

wherein the R-groups are selected from hydrogen, acetyl groups, palmityl groups, and stearyl groups,
wherein one R-group is selected from palmityl and stearyl groups and 30-50% of the total number of R-groups is an acetyl group,
and wherein the weight ratio glycerides of formula (I) containing palmityl groups to glycerides of formula (I) containing stearyl groups is in the range 0.25-4.0.

2. Polypropylene composition according to claim 1 wherein the polyolefin is polypropylene homopolymer.

**3.** Polypropylene composition according to claim 1 or 2 wherein the weight ratio glycerides of formula (I) containing palmityl groups to glycerides of formula (I) containing stearyl groups is in the range 1.0-2.0.

**4.** Film or sheet comprising one or more layers, at least one of the layers comprising the polypropylene composition of any one of claims 1-3.

**5.** Method for preventing fogging at temperatures in the range 0-10°C on a sheet or film comprising at least one layer of polypropylene, said method involving the incorporation in said polypropylene of 0.7-4.0 wt% of glycerides of formula (I):

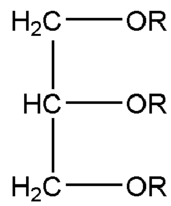

wherein the R-groups are selected from hydrogen, acetyl groups, palmityl groups, and stearyl groups,
wherein one R-group is selected from palmityl and stearyl groups and 30-50% of the total number of R-groups is an acetyl group,
and wherein the weight ratio glycerides of formula (I) containing palmityl groups to glycerides of formula (I) containing stearyl groups is in the range 0.25-4.0.

**6.** Method according to claim 5 wherein the polypropylene is polypropylene homopolymer.

**7.** Method according to claim 5 or 6 wherein the weight ratio glycerides of formula (I) containing palmityl groups to glycerides of formula (I) containing stearyl groups is in the range 1.0-2.0.

**8.** Masterbatch of an antifog agent comprising:

- 10-70 wt% of glycerides of formula (I):

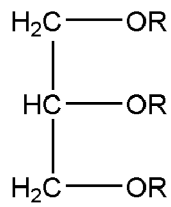

wherein the R-groups are selected from hydrogen, acetyl groups, palmityl groups, and stearyl groups,
wherein one R-group is selected from palmityl and stearyl groups and 30-50% of the total number of R-groups is an acetyl group,
and wherein the weight ratio glycerides of formula (I) containing palmityl groups to glycerides of formula (I) containing stearyl groups is in the range 0.25-4.0, and
- 30-90 wt% of a polymeric matrix.

**9.** Masterbatch according to claim 8 wherein the polymeric matrix is polypropylene.

**10.** Food package comprising the polypropylene film or sheet of claim 4.

Europäisches Patentamt
European Patent Office
Office européen des brevets

# EUROPEAN SEARCH REPORT

Application Number
EP 17 18 1372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 200233<br>Thomson Scientific, London, GB;<br>AN 2002-287438<br>XP002775943,<br>-& JP 2002 020553 A (SHINETSU POLYMER KK)<br>23 January 2002 (2002-01-23)<br>* paragraph [0009] *<br>* paragraph [0012] *<br>* paragraph [0017] *<br>* paragraph [0032]; claims 1, 2 *<br>----- | 1-10 | INV.<br>C08K5/103 |
| X,D | EP 0 578 192 A2 (MITSUBISHI PETROCHEMICAL CO [JP]) 12 January 1994 (1994-01-12)<br>* claims 1-21 *<br>----- | 1-10 | |

TECHNICAL FIELDS SEARCHED (IPC)
C08K
C08L

The present search report has been drawn up for all claims

1

| Place of search | Date of completion of the search | Examiner |
|---|---|---|
| Munich | 23 November 2017 | Scheid, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 1372

This annex lists the patent family members relating to the patent documents cited in the above-mentioned European search report. The members are as contained in the European Patent Office EDP file on
The European Patent Office is in no way liable for these particulars which are merely given for the purpose of information.

23-11-2017

| Patent document cited in search report | Publication date | Patent family member(s) | Publication date |
| --- | --- | --- | --- |
| JP 2002020553 A | 23-01-2002 | NONE | |
| EP 0578192 A2 | 12-01-1994 | EP 0578192 A2 | 12-01-1994 |
| | | US 5492767 A | 20-02-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0578192 A
- US 3412057 A